## Europäisches Patentamt
## European Patent Office
## Office européen des brevets

(19)

(11) Veröffentlichungsnummer : **0 048 399 B2**

(12) **NEUE EUROPÄISCHE PATENTSCHRIFT**

(45) Veröffentlichungstag der neuen Patentschrift :
27.12.91 Patentblatt 91/52

(51) Int. Cl.⁵ : **C08L 25/00, C08L 71/12**

(21) Anmeldenummer : 81107117.4

(22) Anmeldetag : 10.09.81

(54) **Thermoplastische Formmassen.**

Die Akte enthält technische Angaben, die nach dem Eingang der Anmeldung eingereicht wurden und die nicht in dieser Patentschrift enthalten sind.

(30) Priorität : 20.09.80 DE 3035564

(43) Veröffentlichungstag der Anmeldung :
31.03.82 Patentblatt 82/13

(45) Bekanntmachung des Hinweises auf die Patenterteilung :
13.02.85 Patentblatt 85/07

(45) Bekanntmachung des Hinweises auf die Entscheidung über den Einspruch :
27.12.91 Patentblatt 91/52

(84) Benannte Vertragsstaaten :
BE DE FR GB NL

(56) Entgegenhaltungen :
EP-B- 0 048 392
DE-B- 2 258 896
DE-C- 2 119 301

(56) Entgegenhaltungen :
DE-C- 2 211 005
FR-A- 2 090 643
FR-A- 2 134 399
FR-A- 2 162 154
FR-A- 2 197 042
FR-A- 2 212 378
FR-A- 2 337 173
**Journal of Material Sciences, 9, p. 1443-1453, 1972**

(73) Patentinhaber : **BASF Aktiengesellschaft**
**Carl-Bosch-Strasse 38**
**W-6700 Ludwigshafen (DE)**

(72) Erfinder : **Brandstetter, Franz, Dr.**
**Ritterbuechel 45**
**W-6730 Neustadt (DE)**
Erfinder : **Echte, Adolf, Dr.**
**Leuschnerstrasse 42**
**W-6700 Ludwigshafen (DE)**
Erfinder : **Mittnacht, Hans, Dr.**
**Zinkgraefstrasse 44**
**W-6940 Weinheim (DE)**
Erfinder : **Naarmann, Herbert, Dr.**
**Haardtblick 15**
**W-6719 Wattenheim (DE)**

EP 0 048 399 B2

## Beschreibung

Die Erfindung betrifft thermoplastische Formmassen auf der Grundlage von schlagfest modifizierten Styrolpolymerisaten und Polyphenylenäthern.

Thermoplastische Massen, die sich zur Herstellung von Formteilen eignen und die schlagzäh modifizierte Styrolpolymerisate und Polyphenylenäther enthalten sind z. B. aus den US-Patentschriften 3 383 435, 4 128 602 sowie 4 128 603 bekannt. Solche Formmassen eignen sich zur Herstellung von Formteilen, die sich im Vergleich zu schlagzäh modifizierten Styrolpolymerisaten, die nicht mit Polyphenylenäthern abgemischt sind, durch eine bessere Wärmeformbeständigkeit auszeichnen. Die Materialeigenschaften derartiger Formmassen sind im allgemeinen zufriedenstellend, doch hat es sich gezeigt, daß Formteile eine nicht ausreichende Spannungsrißbeständigkeit haben.

Der vorliegenden Erfindung lag daher die Aufgabe zugrunde, thermoplastische Formmassen auf der Grundlage von schlagfest modifizierten Styrolpolymerisaten und Polyphenylenäthern zu schaffen, die zu Formteilen mit einer verbesserten Spannungsrißbeständigkeit verarbeitet werden können.

Diese Aufgabe wird erfindungsgemäß gelöst durch thermoplastische Formmassen auf der Grundlage von schlagfest modifizierten Styrolpolymerisaten, deren Weichkomponentengehalt mindestens 20 Gew.-% beträgt, und Polyphenylenäthern, die dadurch gekennzeichnet sind, daß die Formmassen Mischungen aus zwei modifizierten Styrolpolymerisaten enthalten, deren Kautschukanteil zwischen 2 und 15 Gew.-% beträgt, wobei die Weichkomponente eines Styrolpolymerisates einen mittleren Teilchendurchmesser von 4 bis 10 µm hat und die Teilchen 85 bis 92 Gew.% der Teilchen der Mischungen ausmachen und die Weichkomponente des anderen Styrolpolymerisates einen mittleren Teilchendurchmesser unter 0,6 µm hat und die Teilchen 8 bis 15 Gew.% der Teilchen der Mischungen ausmachen.

Unter Formmassen sollen ungeformte Mischungen verstanden werden, die sich durch thermoplastische Verarbeitung innerhalb bestimmter Temperaturbereiche zu Formteilen oder zu Halbzeug verarbeiten lassen. Die Formmassen können als Granulat vorliegen, sie können aber auch pulverförmig oder durch Tablettierung vorgeformt oder in Form von Platten und Bahnen vorliegen.

Die in den erfindungsgemäßen Formmassen enthaltenen Styrolpolymerisate können beispielsweise durch Mischen von 90 Gew.-Teilen eines Polymerisates mit einer mittleren Teilchengröße von 6 µm mit 10 Gew.-Teilen eines Polymerisates mit einer mittleren Teilchengröße von 0,5 µm erhalten werden.

Besonders geeignet sind solche thermoplastische Formmassen, in denen 85 bis 92 Gew.-% der Teilchen einen Teilchendurchmesser von 5 bis 7 µm und 8 bis 15 Gew.-% der Teilchen einen Durchmesser unter 0,6 µm haben.

Die thermoplastischen Formmassen können schlagfest modifizierte Styrolpolymerisate und Polyphenylenäthern in beliebigen Mengen, beispielsweise in Mengen von 5 bis 90 Gew.-% Styrolpolymerisat und 95 bis 10 Gew.-% Polyphenylenäther enthalten. Für die Herstellung von Formteilen eignen sich insbesondere solche Formmassen, die 20 bis 80 Gew.-% schlagfest modifizierte Styrolpolymerisate und 80 bis 20 Gew.-% Polyphenylenäther enthalten.

Die meist angewandten Verfahren zur Herstellung schlagzäh modifizierter Styrolpolymerisate sind die Polymerisation in Masse oder Lösung, wie es beispielsweise in der US-PS 2 694 692 beschrieben ist und Verfahren zur Masse-Suspensionspolymerisation, wie sie beispielsweise in der US-PS 2 862 906 beschrieben sind. Selbstverständlich sind auch andere Verfahren anwendbar, sofern die obengenannte Teilchengrößenkombination eingestellt wird.

Als monovinylaromatische Verbindungen kommen dabei insbesondere Styrol in Betracht, ferner die kern- oder seitenkettenalkylierten Styrole. Vorzugsweise wird jedoch Styrol allein verwendet.

Als Kautschuke werden die üblicherweise für die Schlagfestmodifizierung von Styrolpolymerisaten gebräuchlichen natürlichen oder synthetischen Kautschuke eingesetzt. Geeignete Kautschuke im Sinne der Erfindung sind neben Naturkautschuk z. B. Polybutadien, Polyisopren und Mischpolymerisate, des Butadiens und/oder Isoprens mit Styrol und anderen Comonomeren, die eine Glastemperatur unter —20° C besitzen. Besonders eignen sich Butadien-Polymerisate mit einem 1,4-cis-Gehalt der zwischen 25 und 98 liegt.

Die Herstellung der schlagfest modifizierten Polymerisate mit dem erfindungsgemäßen Eigenschaftsbild geschieht durch Polymerisation der monovinylaromatischen Verbindungen in Gegenwart des Kautschuks. Die Polymerisation erfolgt, wie erwähnt, dabei in der Regel in an sich bekannter Weise in Masse, Lösung oder wäßriger Dispersion, wobei zunächst der Kautschuk in den polymerisierbaren Monomeren gelöst und diese Ausgangslösung polymerisiert wird.

Bei der Lösungs-Polymerisation können dieser Ausgangslösung noch bis zu maximal 50 Gewichtsprozent, bezogen auf die eingesetzten monovinylaromatischen Verbindungen, eines indifferenten Verdünnungsmittels zugesetzt werden. Als indifferente Verdünnungsmittel sind beispielsweise aromatische Kohlenwasserstoffe oder Gemische von aromatischen Kohlenwasserstoffen geeignet. Bevorzugt werden dabei Toluol, Äthylbenzol,

EP 0 048 399 B2

die Xylole oder Gemische dieser Verbindungen.

Bei der Polymerisation in wäßriger Dispersion wird im allgemeinen auf den Zusatz von Lösungsmitteln verzichtet; eine besonders günstige Ausführungsform besteht darin, die Lösung des Kautschuks in den Monomeren bis zu einem Umsatz von etwa 45% in Masse unter Einwirkung von Scherkräften vorzupolymerisieren, diese Reaktionsmasse dann in Wasser zu suspendieren und anschließend auszupolymerisieren. Im allgemeinen wird dieses Verfahren unter Zugabe öllöslicher, in Radikale zerfallender Initiatoren wie Benzoylperoxid, Dicumylperoxid, Di-tert.-butylperoxid, Azo-diisobutyronitril u. ä. oder Kombinationen davon ausgelöst, doch kann die Vorpolymerisation auch thermisch gestartet werden. Als Suspendiermittel dienen bekanntlich wasserlösliche, hochmolekulare Verbindungem wie Methylcellulose, Oxypropylcellulose, Polyvinylalkohol, teilverseifte Polyvinylacetate usw. oder anorganische Dispergiermittel, z. B. von Bariumsulfat. Die Suspendiermittel werden im allgemeinen in Mengen von 0,1 bis 5 Gew.-%, bezogen auf die organische Phase eingesetzt.

Bei der Polymerisation in Masse oder Lösung wird in der Regel in einem Temperaturbereich zwischen 50 und 250°C, vorzugsweise 100 bis 200°C, polymerisiert. Der Polymerisationsansatz muß dabei mindestens im ersten Abschnitt der Polymerisation, d. h. bis zu Umsätzen der monovinylaromatischen Verbindungen gleich oder kleiner 45 Gew.-% gut gerührt werden. Alle diese Polymerisationsverfahren sind hinreichend bekannt und in Einzelheiten in der Literatur beschrieben. Eine zusammmenfassende Darstellung findet sich bei Amos, Polym. Engng. Sci., 14 (1974), 1, S. 1 bis 11, sowie in den US-Patentschriften 2 694 692 und 2 862 906 auf die wegen weiterer Einzelheiten verwiesen werden soll.

Unter Weichkomponente im Sinne dieser Erfindung wird der bei Raumtemperatur (25°C) in Toluol unlösliche Anteil des schlagfest modifizierten Polymerisats abzüglich etwaiger Pigmente verstanden. Die Weichkomponente entspricht also dem Gelanteil des Produktes.

Die Weichkomponente ist im allgemeinen heterogen aufgebaut; sie bildet sich in der Regel im Laufe des Herstellprozesses aus und wird in der Menge und im Zerteilungsgrad durch die Verfahrensbedingungen beeinflußt. Die zu polymerisierende Lösung des Kautschuks in den monovinylaromatischen Monomeren trennt sich bekanntlich unmittelbar nach Einsetzen der Reaktion in zwei Phasen, von denen die eine, eine Lösung des Kautschuks im monomeren Vinylaromaten, zunächst die kohärente Phase bildet, während die zweite, eine Lösung des Polyvinylaromaten in seinem eigenen Monomeren, in ihr in Tröpfchen suspendiert bleibt. Mit steigendem Umsatz vermehrt sich die Menge der zweiten Phase auf Kosten der ersten und unter Verbrauch der Monomeren; dabei tritt ein Wechsel der Phasenkohärenz auf. Bei diesem bilden sich Tropfen von Kautschuklösung in Polyvinylaromatlösung aus; diese Tropfen halten aber ihrerseits kleinere Tropfen der jetzt äußeren Phase eingeschlossen.

Neben diesem Vorgang läuft eine Pfropfreaktion ab, bei der chemische Verknüpfungen zwischen den Kautschukmolekülen und den Polyvinylaromaten unter Bildung von Pfropf-Copolymeren aus beiden Bestandteilen gebildet werden. Deiser Vorgang ist bekannt und z. B. bei Fischer. Die angew. Makrom. Chem. 33 (1973), S. 35 bis 74, ausführlich dargestellt.

Sowohl der aufgepfropfte als auch der mechanisch eingeschlossene Anteil des Polyvinylaromaten in den Kautschukteilchen ist zur Weichkomponente zu rechnen.

Wenn die Masse ganz durchpolymerisiert ist, ist so eine in eine harte Matrix aus dem Polyvinylaromaten eingelagerte heterogene Weichkomponente entstanden, die aus gepfropften Kautschukteilchen mit Einschlüssen aus Matrixmaterial (Polyvinylaromat) besteht. Je größer die Menge des eingeschlossenen Matrix-Materials ist, um so größer ist bei konstantem Kautschukgehalt die Menge der Weichkomponente.

Diese richtet sich also nicht nur nach der Menge des eingesetzten Kautschuks, sondern auch nach der Prozeßführung besonders vor und während der Phaseninversion. Die Einzelmaßnahmen sind prozeßspezifisch und dem Fachmann bekannt (siehe z. B. Freeguard, Brit. Polym. J. 6 (1974) S. 203 bis 228; Wagner, Robeson, Rubber Chem. Techn. 43 (1970), 1129 ff).

Um zu schlagfesten thermoplastischen Formmassen mit den erfindungsgemäßen Eigenschaftsmerkmalen zu gelangen, wird die Menge an Kautschuk, die vor der Polymerisation in den Monomeren unter Herstellung der Ausgangslösung gelöst wird, in Abhängigkeit von dem Endumsatz bei der Polymerisation so gewählt, daß der Weichkomponentengehalt im resultierenden schlagfest modifizierten Polymerisat der monovinylaromatischen Verbindungen mindestens 20 Gew.-%, vorzugsweise 25 Gew.-% und mehr, bezogen auf das schlagfest modifizierte Polymerisat, beträgt. Die Obergrenze des Weichkomponentengehaltes ist durch die Forderung, daß der Polyvinylaromat die kohärente Phase bilden muß zu etwa 50 bis 60 Gew.-% gegeben. Für die erfindungsgemäßen thermoplastischen Formmassen hat sich dabei ein Weichkomponenten-Gehalt von 25 bis 35 Gewichtsprozent, bezogen auf das schlagfest modifizierte Polymerisat, als besonders günstig erwiesen. Der Kautschuk-Anteil des schlagfest modifizierten Polymerisats beträgt zwischen 2 und 15 gew.-%, vorzugsweise von 5 bis 12 Gew.-%.

Wie dargelegt und hinreichend bekannt, bestehen die schlagfest modifizierten Polymerisate der monovinylaromatischen Verbindungen aus einer einheitlichen umhüllenden Phase (Matrix) aus dem Polymerisat der

3

monovinylaromatischen Verbindung, in die als disperse Phase die Kautschukteilchen der Weichkomponente eingebettet sind, wobei die Kautschuk-Teilchen partiell vernetzt und in mehr oder weniger starkem Maße während der Polymerisation durch die monovinylaromatischen Verbindungen gepfropft worden sind.

Die Bestimmung der mittleren Teilchengröße der dispersen Weichkomponente kann z. B. durch Auszählung und Auswertung elektronenmikroskopischer Dünnschichtaufnahmen der schlagfest modifizierten Polymerisate erfolgen (verg. F. Lenz, Zeitschrift für Wiss. Mikroskopie, 63 (1956), S. 50/56).

Die Einstellung der Teilchengröße der dispersen Weichkomponenten-Phase erfolgt dabei in an sich bekannter Weise bei der Polymerisation der monovinylaromatischen Verbindungen durch Anpassen der Rührgeschwindigkeit im ersten Abschnitt der Polymerisation, d. h. bis zu einem Umsatz der Monomeren von gleich oder kleiner als 45%. Dabei ist die Teilchengröße der dispersen Weichkomponenten-Phase um so größer, je kleiner die Rührerdrehzahl und damit je kleiner die Scherbeanspruchung ist. Der Zusammenhang zwischen der Rührgeschwindigkeit und der Größe und Verteilung der Kautschukteilchen im resultierenden schlagfesten Polymerisat ist z. B. in der zitierten Arbeit von Freeguard beschrieben, auf welche hinsichtlich weiterer Einzelheiten verwiesen wird. Die betreffende notwendige Rührgeschwindigkeit zur Erzielung der gewünschten Teilchengröße der dispersen Weichkomponenten-Phase hängt unter anderem von den jeweiligen Apparateverhältnissen ab und ist dem Fachmann bekannt bzw. läßt sich durch ein paar einfache Versuche bestimmen.

Die mittlere Teilchengröße (Gewichtsmittel) der dispersen Weichkomponenten-Phase wurde bestimmt durch Auszählen und Mitteln der zur gleichen Größenklasse (konst. Intervallbreite) gehörigen Teilchen aus elektronenmikroskopischen Dünnschichtaufnahmen. Mit den Volumina der Teilchen (3. Potenz des scheinbaren Durchmessers) innerhalb der Intervalle wird die Verteilungssummenkurve bestimmt. Beim 50%-Ordinatenwert kann auf der Abszisse der Äquivalentdurchmesser dann abgegriffen werden. Die angegebenen mittleren Durchmesser stellen dabei einen Mittelwert von mindestens 5000 Teilchen dar.

Bei den Polyäthern handelt es sich um Verbindungen auf der Basis von in ortho-Position disubstituierten Polyphenylenoxiden, wobei der Äthersauerstoff der einen Einheit an den Benzolkern der benachbarten Einheit gebunden ist. Dabei sollen mindestens 50 Einheiten miteinander verknüpft sein. Die Polyäther können in ortho-Stellung zum Sauerstoff Wasserstoff, Halogen, Kohlenwasserstoffe, die kein $\alpha$-ständiges tert. Wasserstoffatom besitzen, Halogenkohlenwasserstoffe, Phenylreste und Kohlenwasserstoff-oxi-Reste tragen. So kommen in Frage: Poly(2,6-dichlor-1,4-phenylen)äther, Poly(2,6-diphenyl-1,4-phenylen)äther, Poly(2,6-dimethoxy-1,4-phenylen)äther, Poly(2,6-dimethyl-1,4-phenylen)äther, Poly(2,6-dibrom-1,4-phenylen)äther. Bevorzugterweise wird der Poly(2,6-dimethyl-1,4-phenylen)äther eingesetzt. Besonders bevorzugt werden Poly-(2,6-dimethyl-1,4-phenylen)äther mit einer Grenzviskosität zwischen 0,45 und 0,65 dl/g (gemessen in Chloroform bei 30° C).

Die Polyphenylenäther können z. B. in Gegenwart von komplexbildenden Mitteln wie Kupferbromid und sek.-Dibutylamin aus den Phenolen hergestellt werden.

Die Mischungen aus den schlagzäh modifizierten Styrolpolymerisaten und Polyphenylenäthern können außerdem weitere Zusatzstoffe wie Pigmente, Farbstoffe, Füllstoffe, Flammschutzmittel, weitere verträgliche Polymere, Antistatika, Antioxidantien und Schmiermittel enthalten.

Man stellt die erfindungsgemäßen thermoplastischen Formmassen wie üblich auf Vorrichtungen, die ein homogenes Mischen zulassen, wie Knetern, Extrudern oder Walzenmischgeräten her. Neben der hohen Spannungsrißbeständigkeit haben die Formmassen weitere gute Eigenschaften, wie hohe Wärmeformbeständigkeit und hohe Zähigkeit.

Beispiele und Vergleichsversuche

Ein schlagfestes Polystyrol mit einer mittleren Teilchengröße=0,5 μm wird mit folgender Rezeptur erhalten:
In einem 5-l-Rührkessel mit Blattrührer wurde eine Lösung bestehend aus

| | |
|---|---|
| 1560 g | Styrol |
| 240 g | Bu/S-Blockcopolymerisat mit verschmiertem Übergang zwischen den Blöcken:[$\eta$] = 1,74 [dl/g] (Toluol 25°); Blockpolystyrol = 31,0%; [$\eta$] = 0,364 [dl/g] (Toluol 25°); Gesamtstyrolgehalt =41,6% |
| 1,6 g | t-Dodecylmercaptan |
| 2,2 g | Octadecyl-3(3′,5′-ditert.-butyl-4-hydroxyphenyl)-propionat |
| 1,7 g | Dicumylperoxid |

bei 110° C Innentemperatur und einer Rührerdrehzahl von 150 Upm bis zu einem Feststoffgehalt von 43,8 Gew.-% vorpolymerisiert.

Anschließend wurden 1800 ml Wasser, die 9,0 g Polyvinylpyrrolidon vom K-Wert 90 und 1,8 g $Na_4P_2O_7$ enthielten, zugesetzt und die Rührerdrehzahl auf 300 Upm erhöht. Durch Nachpolymerisation von 5 Stunden bei 120° C und 5 Stunden bei 140° C wurde bis zu einem Styrolumsatz > 99% auspolymerisiert.

Nach folgender Vorschrift wurde ein schlagfestes Polystyrol mit einer mittleren Teilchengröße von 6 µm hergestellt.

In einem 4-I-Rührkessel mit Blattrührer wurde eine Lösung bestehend aus

| 1283 g | Styrol |
| 112 g | Polybutadien (1,2-Vinylgehalt 2 Gew.-%) |
| 1,5 g | t-Dodecylmercaptan |
| 1,5 g | Octadecyl-3(3′,5′-di-tert.-butyl-4′-hydroxi-phenyl)-propionat |
| 1,5 g | Dicumylperoxid bei 110°C Innentemperatur und einer Rührerdrehzahl von 150 Upm bis zu einem |

Feststoffgehalt von 25,4 Gew.-% vorpolymerisiert. Anschließend wurden 1800 ml Wasser, die 9 g Polyvinylpyrrolidon vom K-Wert 90 und 1,8 g $Na_4P_2O_7$ enthielten, zugesetzt und die Rührerdrehzahl auf 300 Upm erhöht. Durch Nachpolymerisation von 3 Stunden bei 110°C, 3 Stunden bei 120°C und 4 Stunden bei 140°C wurde bis zu einem Styrolumsatz > 99% auspolymerisiert.

Durch Mischen dieser beiden Polymerisate wurden die in der Tabelle angegebenen Zusammensetzungen eingestellt.

Die in der Tabelle angegebenen Gewichtsteile schlagfest modifizierten Polystyrol und von Poly(2,6-dimethyl-1,4-phenylen)äther wurden mit jeweils 0,8 Gew.-Teilen Tris(nonylphenyl)phosphit und 1,5 Gew.-Teilen Polyäthylen auf einem 2-Wellen-Extruder bei 280°C geschmolze homogenisiert, gemischt und granuliert. Das Poly(2,6-dimethyl-1,4-phenylen)äther hatte eine Grenzviskosität von 0,48 dl/g.

Aus den Mischungen wurden mittels einer Spritzgußmaschine bei 280°C Prüfkörper hergestellt. Diese Prüfkörper wurden für die Dauer von 1 Stunde in Isopropanol gelagert und danach die Spannungsrißbeständigkeit nach DIN 53 449 ermittelt.

Die Ergebnisse sind in der Tabelle zusammengefaßt:

Tabelle

| Beispiele | Schlagfestes Polystyrol Gewichtsanteil an Teilchen 5–7 µm | 0,5 µm | Anteil in der Mischung [Gew.-Tle] | Poly(2,6-dimethyl-1,4-phenylen)äther[1]) Anteil in der Mischung [Gew.-Tle] | Rißgrenzen $U_R$ [µm] über Zugfestigkeit | Reißdehnung |
|---|---|---|---|---|---|---|
| (erfindungsgemäß) | | | | | | |
| 1 | 90 | 10 | 75 | 25 | 500 | 500 |
| 2 | 88 | 12 | 75 | 25 | 500 | 500 |
| Vergleichsversuche | | | | | | |
| (nicht erfindungsgemäß) | | | | | | |
| A | 94 | 6 | 75 | 25 | 270 | 230 |
| B | 80 | 20 | 75 | 25 | 190 | 190 |

[1]) Poly(2,6-dimethyl-1,4-phenylen)äther mit einer Grenzviskosität von 0,48 dl/g.

## Patentansprüche

1. Thermoplastische Formmassen auf der Grundlage von schlagfest modifizierten Styrolpolymerisaten, deren Weickomponentengehalt mindestens 20 Gew.-% beträgt, und Polyphenylenäthern, dadurch gekennzeichnet, daß die Formmassen Mischungen aus zwei modifizierten Styrolpolymerisaten enthalten, deren Kaustschukanteil zwischen 2 und 15 Gew.% beträgt, wobei die Weichkomponente eines Styrolpolymerisates einen mittleren Teilchendurchmesser von 4 bis 10 μm hat und die Teilchen 85 bis 92 Gew.% der Teilchen der Mischungen ausmachen und die Weichkomponente des anderen Styrolpolymerisates einen mittleren Teilchendurchmesser unter 0,6 μm hat und die Teilchen 8 bis 15 Gew.% der Teilchen der Mischungen ausmachen.

## Revendications

1. Masses à mouler thermoplastiques à base de polymères de styrène modifiés dans le sens de la résistance aux chocs, dont la teneur en composants souples s'élève au moins à 20% en poids, et d'éthers de polyphénylène, caractérisées en ce que ces masses à mouler contiennent des mélanges de deux polymères de styrène modifiés dont la part de caoutchouc est comprise entre 2 et 15% en poids, le composant souple de l'un des polymères de styrène ayant un diamètre moyen de particules de 4 à 10 μm et ses particules constituant de 85 à 92% en poids des particules des mélanges, et le composant souple de l'autre polymère de styrène ayant un diamètre moyen de particules inférieur à 0,6 μm et ses particules constituant de 8 à 15% en poids des particules des mélanges.

2. Masses à mouler thermoplastiques selon la revendication 1, caractérisées en ce que la teneur en composant souple s'élève à 25-35% en poids du polyester de styrène modifié dans le sens de la résistance aux chocs.

## Claims

1. A thermoplastic molding composition based on an impact modified styrene polymer whose soft component content is not less than 20% by weight and a polyphenylene ether, containing a mixture of two modified styrene polymers whose rubber content is within the range from 2 to 15% by weight, the soft component of one of the styrene polymers having a median particle diameter of from 4 to 10 μm and the particles accounting for from 85 to 92% by weight of the particles of the mixture and the soft component of the other styrene polymer having a median particle diameter of less than 0.6 μm and the particles accounting for from 8 to 15% by weight of the particles of the mixture.

2. A thermoplastic molding composition as claimed in claim 1, wherein the soft component accounts for 25 - 35% by weight of the impact modified styrene polymer.